# FASCICULE DE BREVET EUROPEEN

(11) **EP 0 776 453 B1**
(45) Date de publication et mention de la délivrance du brevet: **20.05.1998**
(21) Numéro de dépôt: 96922942.6
(22) Date de dépôt: 18.06.1996
(51) Int. Cl.: F28D 1/02, B60K 11/02

(54) **DISPOSITIF DE RACCORDEMENT ELECTRIQUE D'UN MOTO-VENTILATEUR POUR UN ECHANGEUR DE CHALEUR DE VEHICULE AUTOMOBILE**
VORRICHTUNG ZUM ELEKTRISCHEN ANSCHLUSS EINES LÜFTERAGGREGATES FÜR DEN WÄRMETAUSCHER EINES KRAFTFAHRZEUGES
DEVICE FOR ELECTRICALLY CONNECTING A MOTOR-FAN UNIT IN A MOTOR VEHICLE HEAT EXCHANGER

(30) Priorité: 22.06.1995 FR 9507511
(43) Date de publication de la demande: 04.06.1997
(73) Titulaire: VALEO THERMIQUE MOTEUR, 78321 La Verrière (FR)
(72) Inventeur: POTIER, Michel, F-78120 Rambouillet (FR)
(74) Mandataire: Bezault, Jean
(86) Numéro de dépôt international: FR9600937
(87) Numéro de publication internationale: WO9701070

(56) Documents cités:
- EP-A- 0 186 581
- EP-A- 0 316 137
- EP-A- 0 380 917
- FR-A- 2 573 128
- US-A- 3 324 938

## Description

L'invention concerne un dispositif de raccordement électrique d'un moto-ventilateur monté sur un corps d'un échangeur de chaleur, en particulier d'un radiateur servant au refroidissement d'un moteur thermique de véhicule automobile.

Elle s'applique en particulier au raccordement électrique d'un moto-ventilateur comprenant un moteur électrique fixé sur le corps de l'échangeur de chaleur et entraînant une hélice disposée en regard d'une grande face du corps à ailettes.

On connaît déjà, d'après la publication de Brevet français No 2 573 128, un échangeur de chaleur de ce type.

Dans un tel échangeur de chaleur, le moteur électrique du moto-ventilateur est fixé directement au corps de l'échangeur de chaleur, contrairement aux solutions traditionnelles dans lesquelles ce moteur est fixé, soit sur l'échangeur de chaleur par l'intermédiaire de traverses, soit à la carrosserie ou au châssis du véhicule.

Il en résulte notamment une diminution de l'encombrement de l'ensemble échangeur de chaleur-moto-ventilateur, une diminution des vibrations engendrées par l'hélice et un meilleur écoulement de l'air traversant le corps à ailettes.

Toutefois, dans un échangeur de chaleur selon la publication précitée, le moteur est disposé entre l'hélice et une grande face du corps de l'échangeur de chaleur, ce qui pose un problème pour le raccordement électrique du moto-ventilateur, par rapport aux solutions traditionnelles dans lesquelles le moteur du moto-ventilateur se trouve de l'autre côté de l'hélice par rapport au corps à ailettes.

Pour résoudre ce problème, la Demanderesse a déjà imaginé plusieurs solutions qui consistent à faire courir un faisceau de câbles électriques le long d'une partie au moins de la grande face du corps de l'échangeur, et à maintenir ce faisceau plaqué contre le corps à ailettes de manière à être hors de tout contact de l'hélice, comme enseigné dans la Demande de brevet français No 95 01044 (non publiée).

L'invention vient apporter une autre solution à ce problème en proposant un dispositif de connexion offrant un assemblage plus aisé et évitant tout risque de coupure des fils électriques.

Elle propose à cet effet un dispositif de raccordement du type défini en introduction, lequel comprend une barrette allongée propre à être disposée à plat le long de la grande face du corps et formée d'une âme isolante dans laquelle sont noyés au moins deux conducteurs électriques, une première fiche de connexion prévue à une première extrémité de la barrette et propre à être raccordée à la fiche de connexion du moteur électrique, et une seconde fiche de connexion prévue à une seconde extrémité de la barrette et propre à être raccordée à la fiche de connexion du circuit électrique de commande.

On obtient ainsi un dispositif qui peut être facilement connecté à la fois au moteur électrique du moto-ventilateur et au circuit électrique de commande.

En outre, les conducteurs électriques sont noyés dans une âme isolante qui joue le rôle de prolongateur entre les deux fiches de connexion et se trouvent ainsi protégés.

On évite ainsi tout risque de coupure ou d'endommagement des conducteurs électriques, soit du fait d'un contact accidentel avec l'hélice, soit du fait du frottement engendré par le corps de l'échangeur, lequel comprend habituellement des ailettes dont les arêtes sont coupantes.

Selon une autre caractéristique de l'invention, la barrette, ainsi que la première fiche de connexion et la seconde fiche de connexion, forment un ensemble monobloc.

Avantageusement, la barrette présente une section transversale de forme générale rectangulaire aplatie et d'épaisseur réduite, les conducteurs électriques étant noyés dans l'épaisseur de la barrette.

De façon avantageuse, les conducteurs électriques sont réalisés sous la forme de lames aplaties, ce qui facilite leur intégration dans l'épaisseur de la barrette.

L'invention prévoit également que la barrette soit munie d'une nervure de rigidification qui s'étend sur une partie au moins de sa longueur et qui est dirigée perpendiculairement au plan de la grande face.

De préférence, cette nervure présente une hauteur qui décroît depuis la première fiche de connexion en direction de la seconde fiche de connexion et qui présente une valeur minimale à la périphérie de l'hélice.

Ainsi, cette nervure ne risque pas d'entraver le passage de l'hélice, laquelle comprend généralement une jupe à sa périphérie.

Selon une autre caractéristique de l'invention, la première fiche de connexion est propre à se brancher sur la fiche de connexion du moteur dans une direction radiale par rapport à l'axe de rotation de l'hélice, et parallèlement au plan de la grande face.

Cette première fiche de connexion comporte avantageusement deux broches mâles entourées par une douille isolante solidaire de la barrette.

Selon une autre caractéristique de l'invention, la seconde fiche de connexion est propre à se brancher sur la fiche de connexion du circuit électrique dans une direction perpendiculaire au plan de la grande face.

Avantageusement, cette seconde fiche de connexion comporte deux broches mâles entourées par une douille isolante solidaire de la barrette.

L'invention prévoit en outre que la barrette comporte, à proximité de la seconde fiche de connexion, un trou traversant destiné au passage d'un moyen de fixation permettant d'assujettir la barrette au corps de l'échangeur de chaleur.

Dans une variante de réalisation de l'invention, le dispositif de raccordement comprend une résistance électrique montée entre l'un des conducteurs électriques et une broche intermédiaire de la seconde fiche de connexion et disposée dans la zone d'évolution de l'hélice.

Il en résulte que la résistance électrique, qui permet de faire varier la vitesse du moto-ventilateur, est disposée dans la zone d'évolution de l'hélice, ce qui facilite son refroidissement.

Dans la description qui suit, faite seulement à titre d'exemple, on se réfère aux dessins annexés, sur lesquels :
- la figure 1 est une vue en plan d'un échangeur de chaleur équipé d'un moto-ventilateur et d'un dispositif de raccordement électrique selon l'invention;
- la figure 2 est une vue en coupe partielle, à échelle agrandie, selon la ligne II-II de la figure 1;
- la figure 3 est une vue en coupe longitudinale du dispositif de raccordement des figures 1 et 2;
- la figure 4 est une vue en coupe transversale, à échelle agrandie, selon la ligne IV-IV de la figure 3; et
- la figure 5 est une vue partielle de dessus d'un dispositif de raccordement dans une variante de réalisation.

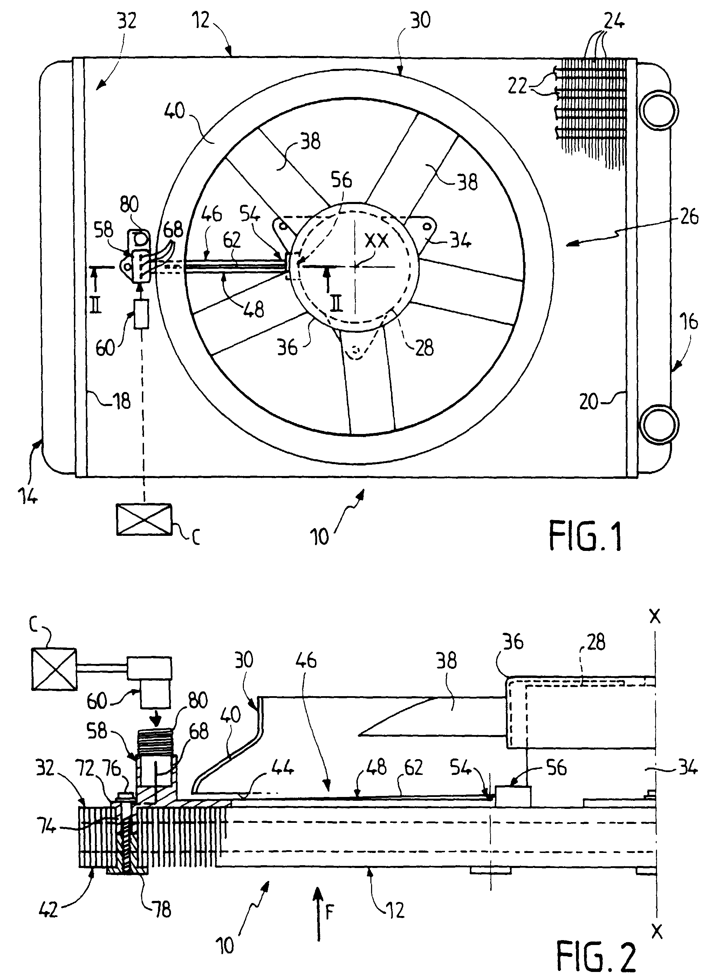

On se réfère tout d'abord à la figure 1 qui représente un échangeur de chaleur 10, tel qu'un radiateur servant au refroidissement d'un moteur thermique de véhicule automobile.

L'échangeur 10 comprend un corps 12 monté entre deux boîtes à eau 14 et 16 par l'intermédiaire de deux plaques collectrices 18 et 20. Le corps 12 est constitué d'un faisceau de tubes 22 traversant une multiplicité d'ailettes 24 et dont les extrémités sont reçues à étanchéité dans les plaques collectrices 18 et 20.

Les ailettes 24 sont, dans l'exemple représenté, de fines plaques métalliques de forme générale rectangulaire qui sont disposées parallèlement entre elles et perpendiculairement aux axes des tubes 22.

Sur le corps 12 est monté directement un moto-ventilateur 26 comprenant un moteur électrique 28 entraînant en rotation une hélice 30 autour d'un axe XX. L'hélice 30 est disposée en regard d'une grande face 32, de forme générale rectangulaire, du corps 12, qui s'étend entre les plaques collectrices 18 et 20.

Le moteur 28 est solidaire d'un support triangulaire 34, lequel est fixé sur le corps 12 par des moyens appropriés qui peuvent être, par exemple, ceux décrits dans la publication de Brevet français No 2 573 128 déjà citée.

L'hélice 30 comprend un moyeu 36 calé sur l'arbre du moteur 28 et relié par des pales radiales 38 à une jupe 40 de forme générale circulaire. La jupe 40, qui constitue le pourtour de l'hélice, présente un profil de forme choisie (figure 2) pour canaliser un flux d'air F qui traverse l'échangeur de chaleur à partir d'une grande face 42 du corps 12 pour sortir par l'autre face 32.

Comme on peut le voir sur la figure 2, la jupe 40 comporte un rebord annulaire 44 qui est situé en vis-à-vis et à faible distance de la face 32.

Le moteur électrique 28 est relié à un circuit de commande C (figures 1 et 2) par un dispositif de raccordement électrique 46 selon l'invention.

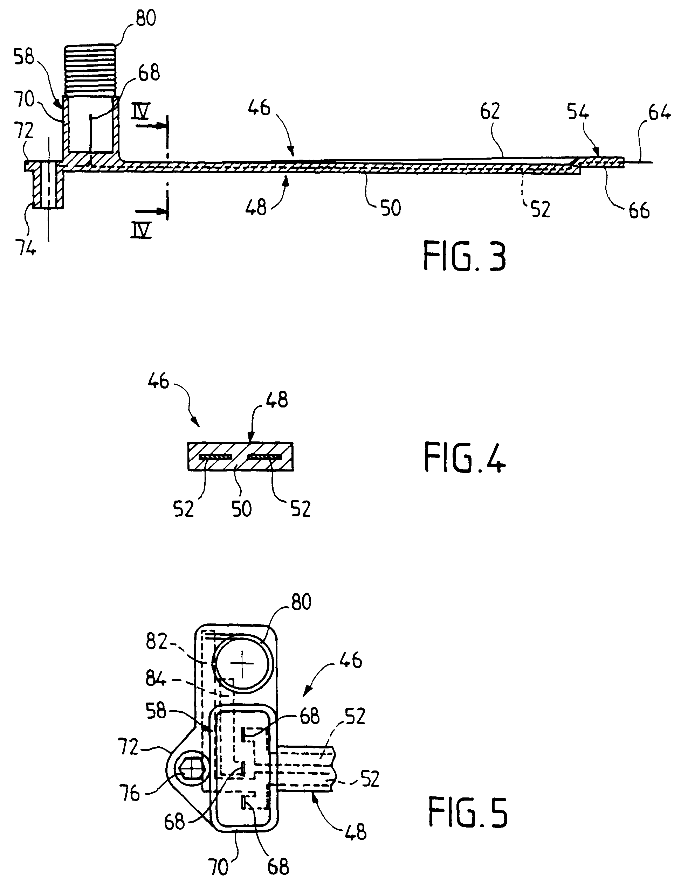

Le dispositif 46 comprend une barrette allongée 48 propre à être disposée à plat le long d'une partie de la grande face 32 du corps 12 et formée d'une âme isolante 50 dans laquelle sont noyés deux conducteurs électriques 52 (figures 3 et 4). Dans l'exemple, la direction générale de la barrette est parallèle aux tubes 24, donc perpendiculaire aux ailettes 24. L'âme 50 de la barrette 48 présente une section transversale de forme générale rectangulaire aplatie et d'épaisseur réduite (figure 4) pour occuper le minimum de place entre la grande face 32 et le rebord 44 de l'hélice (figure 2).

Les conducteurs électriques 52 sont réalisés sous la forme de deux lames aplaties disposées parallèlement entre elles et noyées dans l'épaisseur de l'âme 50 (figure 4).

Le dispositif de raccordement 46 comprend en outre une première fiche de connexion 54 (figures 1 à 3) prévue à une première extrémité de la barrette et propre à être raccordée à une fiche de connexion 56 prévue sur le support 34 pour établir une connexion électrique avec le moteur électrique 28.

Le dispositif de raccordement 46 comprend en outre une seconde fiche de connexion 58 (figures 1 à 3) propre à être raccordée à une fiche de connexion 60 (figures 1 et 2), elle-même reliée au circuit électrique de commande C.

Ainsi, les fiches de connexion 54 et 56 jouent le rôle de deux demi-connecteurs qui, une fois branchés, assurent une liaison électrique entre les deux conducteurs 52 et le moteur électrique 28.

De même, les deux fiches de connexion 58 et 60 jouent le rôle de deux demi-connecteurs qui, une fois branchés, assurent une liaison électrique entre les deux conducteurs 52 et le circuit C.

La barrette 48 est munie d'une nervure de rigidification 62 (figures 1 à 3) qui s'étend sur une partie au moins de sa longueur et qui est dirigée perpendiculairement au plan de la grande face. Cette nervure présente une hauteur qui décroît progressivement depuis la première fiche de connexion 54 en direction de la seconde fiche de connexion 58 et qui présente une valeur minimale à la périphérie de l'hélice, c'est-à-dire dans la région du bord 44 de la jupe 50.

La nervure 62 contribue à maintenir la barrette 48 appliquée étroitement contre la grande face 32 du corps de l'échangeur de chaleur.

La première fiche de connexion 54 comporte deux broches mâles 64 (figure 3) qui s'étendent parallèlement à la direction longitudinale de la barrette 48 pour permettre à la première fiche de connexion 54 de se brancher sur la fiche de connexion 56 dans une direction radiale par rapport à l'axe de rotation XX de l'hélice et parallèlement au plan de la grande face 32.

La première fiche de connexion 54 est une fiche de type mâle et ses deux broches 64 dépendent d'une douille isolante 66 solidaire de la barrette 48. De préférence, la douille 66 est venue de moulage avec la barrette 48.

La seconde fiche de connexion 58 est également une fiche de type mâle. Elle comprend, dans l'exemple, trois broches mâles 68 s'étendant dans une direction généralement perpendiculaire à la barrette 48, c'est-à-dire perpendiculaire au plan de la grande face 32.

Les broches 68 sont entourées par une douille 70 (figures 3 et 5) qui est solidaire de la barrette 48 et est de préférence venue de moulage avec elle.

La barrette 48 se prolonge, au-delà de la fiche de connexion 58, par une patte 72 munie d'un manchon 74 (figure 3) permettant le passage d'un organe de fixation pour assujettir la barrette 48 au corps de l'échangeur. Ce moyen de fixation est réalisé sous la forme d'une vis 76 qui traverse le manchon 74 et l'épaisseur du corps 12 et est ensuite maintenue par un écrou 78 (figure 2).

Ainsi, lorsque la fiche de connexion 54 est branchée sur la fiche de connexion 56 et que la vis de fixation 76 est implantée, le dispositif de raccordement est maintenu en position contre la grande face 32 de l'échangeur de chaleur, en mettant ainsi la barrette 48 à l'abri de tout contact de l'hélice et de tout contact de vibration avec le corps 12.

La fiche de connexion 58 se trouve en dehors de la zone d'action de l'hélice et est reliée au circuit de commande C par la fiche de connexion 60.

Le dispositif de raccordement 46 de l'invention forme ainsi un ensemble monobloc pouvant être raccordé facilement au moteur électrique 28 et au circuit de commande C.

Le dispositif de raccordement 46 comporte en outre une résistance électrique 80, dans l'exemple une résistance bobinée, située à proximité de la fiche de connexion 58. Cette résistance 80 est reliée, par l'intermédiaire d'une liaison électrique 82, à l'une des broches 68 (pôle +) qui est elle-même reliée à l'un des conducteurs 52 (figure 5). La résistance 80 est en outre reliée, par l'intermédiaire d'une liaison électrique 84, à une autre broche 68 (pôle +) située en position intermédiaire de la fiche de connexion, et non reliée aux conducteurs 52. La dernière broche 68 (pôle -) est reliée à l'autre conducteur 52.

Lorsque le circuit de commande est relié aux deux broches extrêmes 68 en court-circuitant la résistance 80, le moteur 28 peut être entraîné à grande vitesse. Par contre, lorsque le circuit C établit une liaison avec l'une des broches 68 (pôle négatif) et la broche intermédiaire 68 (pôle positif), la résistance 80 est mise en circuit et le moteur 28 tourne à une plus faible vitesse.

Comme on le voit sur les figures 1, 2, 3 et 5, la résistance 80 est située dans une position proche de la fiche de connexion 58 et de la zone d'action de l'hélice. Il en résulte un meilleur refroidissement de la résistance.

Bien entendu, l'invention n'est pas limitée aux formes de réalisation décrites précédemment à titre d'exemple.

Ainsi, la fiche de connexion 52 peut être réalisée sous la forme d'une fiche à deux broches sans être reliée à une résistance électrique, dans le cas où le moto-ventilateur est prévu pour fonctionner avec une seule vitesse.

## Revendications

1. Dispositif de raccordement électrique d'un moto-ventilateur monté sur un corps d'un échangeur de chaleur, le moto-ventilateur (26) comprenant un moteur électrique (28) fixé sur le corps (12) de l'échangeur, entraînant une hélice (30) disposée en regard d'une grande face (32) du corps de l'échangeur, et relié à un circuit de commande (C) par ledit dispositif,
caractérisé en ce que le dispositif de raccordement comprend une barrette allongée (48) propre à être disposée à plat le long de la grande face (32) du corps et formée d'une âme isolante (50) dans laquelle sont noyés au moins deux conducteurs électriques (52), une première fiche de connexion (54) prévue à une première extrémité de la barrette (48) et propre à être raccordée à la fiche de connexion (56) du moteur électrique (28), et une seconde fiche de connexion (58) prévue à une seconde extrémité de la barrette (48) et propre à être raccordée à la fiche de connexion (60) du circuit électrique de commande (C).

2. Dispositif selon la revendication 1, caractérisé en ce que la barrette (48) ainsi que la première fiche de connexion (54) et la seconde fiche de connexion (58) forment un ensemble monobloc.

3. Dispositif selon l'une des revendications 1 et 2, caractérisé en ce que la barrette (48) présente une section transversale de forme générale rectangulaire aplatie et d'épaisseur réduite et en ce que les conducteurs électriques (52) sont noyés dans l'épaisseur de la barrette.

4. Dispositif selon l'une des revendications 1 à 3, caractérisé en ce que les conducteurs électriques (52) sont réalisés sous la forme de lames aplaties.

5. Dispositif selon l'une des revendications 1 à 4, caractérisé en ce que la barrette (48) est munie d'une nervure de rigidification (62) qui s'étend sur une partie au moins de la longueur de la barrette et qui est dirigée perpendiculairement au plan de la grande face (32) du corps de l'échangeur.

6. Dispositif selon la revendication 5, caractérisé en ce que la nervure (62) présente une hauteur qui décroît depuis la première fiche de connexion (54) en direction de la seconde fiche de connexion (58) et qui présente une valeur minimale à la périphérie (40) de l'hélice.

7. Dispositif selon l'une des revendications 1 à 6, caractérisé en ce que la première fiche de connexion (54) est propre à se brancher sur la fiche de connexion (56) du moteur électrique (28) dans une direction radiale par rapport à l'axe de rotation (XX) de l'hélice, et parallèlement au plan de la grande face (32).

8. Dispositif selon la revendication 7, caractérisé en ce que la première fiche de connexion (54) comporte deux broches mâles (64) entourées par une douille isolante (66) solidaire de la barrette (48).

9. Dispositif selon l'une des revendications 1 à 8, caractérisé en ce que la seconde fiche de connexion (58) est propre à se brancher sur la fiche de connexion (60) du circuit électrique (C) dans une direction perpendiculaire au plan de la grande face (32) du corps d'échangeur de chaleur.

10. Dispositif selon la revendication 9, caractérisé en ce que la seconde fiche de connexion (58) comporte deux broches mâles (68) entourées par une douille isolante (70) solidaire de la barrette (48).

11. Dispositif selon l'une des revendications 1 à 10, caractérisé en ce que la barrette (48) comporte, à proximité de la seconde fiche de connexion (58), un manchon (74) destiné au passage d'un moyen de fixation (76) pour assujettir la barrette (48) au corps de l'échangeur de chaleur.

12. Dispositif selon l'une des revendications 1 à 11, caractérisé en ce au'il comprend une résistance électrique (80) montée entre l'un des conducteurs électriques (52) et une broche intermédiaire (68) de la seconde fiche de connexion (58) et située dans une position proche de la zone d'action de l'hélice (30).

## Patentansprüche

1. Vorrichtung zum elektrischen Anschluß eines Lüfteraggregates, das auf dem Körper eines Wärmetauschers angebracht ist, wobei das Lüfteraggregat (26) einen Elektromotor (28) umfaßt, der auf dem Körper (12) des Wärmetauschers befestigt ist, ein gegenüber einer großen Fläche (32) des Wärmetauscherkörpers angeordnetes Lüfterrad (30) antreibt und durch die besagte Vorrichtung mit einem Steuerstromkreis (C) verbunden ist,
**dadurch gekennzeichnet,** daß die Anschlußvorrichtung eine längliche Leiste (48), die flach entlang der großen Fläche (32) des Körpers angeordnet werden kann und aus einem Isolierkern (50) besteht, in den mindestens zwei elektrische Leiter (52) eingelassen sind, einen ersten Steckverbinder (54), der an einem ersten Ende der Leiste (48) vorgesehen ist und mit dem Steckverbinder (56) des Elektromotors (28) verbunden werden kann, und einen zweiten Steckverbinder (58) umfaßt, der an einem zweiten Ende der Leiste (48) vorgesehen ist und mit dem Steckverbinder (60) des Steuerstromkreises (C) verbunden werden kann.

2. Vorrichtung nach Anspruch 1, **dadurch gekennzeichnet,** daß die Leiste (48) sowie der erste Steckverbinder (54) und der zweite Steckverbinder (58) eine einteilige Baueinheit bilden.

3. Vorrichtung nach einem der Ansprüche 1 und 2, **dadurch gekennzeichnet,** daß die Leiste (48) einen Querschnitt mit einer allgemein abgeflachten rechteckigen Form und einer geringen Dicke aufweist und daß die elektrischen Leiter (52) in die Dicke der Leiste eingelassen sind.

4. Vorrichtung nach einem der Ansprüche 1 bis 3, **da-durch gekennzeichnet,** daß die elektrischen Leiter (52) in Form von abgeflachten Lamellen ausgeführt sind.

5. Vorrichtung nach einem der Ansprüche 1 bis 4, **dadurch gekennzeichnet,** daß die Leiste (48) mit einer Versteifungsrippe (62) versehen ist, die sich zumindest auf einem Teil der Länge der Leiste erstreckt und die senkrecht zur Ebene der großen Fläche (32) des Wärmetauscherkörpers gerichtet ist.

6. Vorrichtung nach Anspruch 5 , **dadurch gekennzeichnet,** daß die Rippe (62) eine Höhe aufweist, die vom ersten Steckverbinder (54) in Richtung des zweiten Steckverbinders (58) abnimmt und die am Umfang (40) des Lüfterrads eine minimale Dicke aufweist.

7. Vorrichtung nach einem der Ansprüche 1 bis 6, **dadurch gekennzeichnet,** daß der erste Steckverbinder (54) mit dem Steckverbinder (56) des Elektromotors (28) in einer im Verhältnis zur Drehachse (XX) des Lüfterrads radialen Richtung und parallel zur Ebene der großen Fläche (32) verbunden werden kann.

8. Vorrichtung nach Anspruch 7, **dadurch gekennzeichnet,** daß der erste Steckverbinder (54) zwei Steckstifte (64) umfaßt, die von einer fest mit der Leiste (48) verbundenen Isolierhülse (66) umgeben sind.

9. Vorrichtung nach einem der Ansprüche 1 bis 8, **dadurch gekennzeichnet,** daß der zweite Steckverbinder (58) mit dem Steckverbinder (60) des Stromkreises (C) in einer Richtung verbunden werden kann, die senkrecht zur Ebene der großen Fläche (32) des Wärmetauscherkörpers verläuft.

10. Vorrichtung nach Anspruch 9, **dadurch gekennzeichnet,** daß der zweite Steckverbinder (58) zwei Steckstifte (68) umfaßt, die von einer fest mit der Leiste (48) verbundenen Isolierhülse (70) umgeben sind.

11. Vorrichtung nach einem der Ansprüche 1 bis 10, **dadurch gekennzeichnet,** daß die Leiste (48) in der Nähe des zweiten Steckverbinders (58) eine Muffe (74) umfaßt, die für den Durchgang eines Befestigungsmittels (76) zur Befestigung der Leiste (48) am Körper des Wärmetauschers bestimmt ist.

12. Vorrichtung nach einem der Ansprüche 1 bis 11, **dadurch gekennzeichnet,** daß sie einen elektrischen Widerstand (80) umfaßt, der zwischen einem der elektrischen Leiter (52) und einem Zwischenstift (68) des zweiten Steckverbinders (58) geschaltet und in einer Position in der Nähe des Wirkungsbereichs des Lüfterrads (30) angeordnet ist.

## Claims

1. A device for the electrical connection of a motorised fan unit mounted on a heat exchanger body, the motorised fan unit (26) comprising an electric motor (28) fixed on the body (12) of the heat exchanger, driving a fan rotor (30) which is disposed facing a major face (32) of the heat exchanger body, and connected to a control circuit (C) by the said device, characterised in that the connecting device comprises an elongate strip (48) adapted to be laid flat along the major face (32) of the body, and formed from an insulating spine (50) in which at least two electrical conductors (52) are embedded, a first connector (54) arranged at a first end of the strip (48) and adapted to be connected to the connector (56) of the electric motor (28), and a second connector (58), arranged at a second end of the strip (48) and adapted to be connected to the connector (60) of the electrical control circuit (C).

2. A device according to Claim 1, characterised in that the strip (48), together with the first connector (54) and the second connector (58), constitute a one-piece assembly.

3. A device according to Claim 1 or Claim 2, characterised in that the strip (48) has in transverse cross section the general form of a flattened rectangle of reduced thickness, and in that the electrical conductors (52) are embedded within the thickness of the strip.

4. A device according to one of Claims 1 to 3, characterised in that the electrical conductors (52) are made in the form of flattened blades.

5. A device according to one of Claims 1 to 4, characterised in that the strip (48) is provided with a stiffening rib (62) which extends along at least part of the length of the strip and at right angles to the plane of the major face (32) of the heat exchanger body.

6. A device according to Claim 5, characterised in that the rib (62) has a height which decreases from the first connector (54) towards the second connector (58), and which has a minimum value at the periphery (40) of the rotor.

7. A device according to one of Claims 1 to 6, characterised in that the first connector (54) is adapted to be connected to the connector (56) of the electric motor (28) in a radial direction with respect to the axis of rotation (XX) of the rotor, and parallel to the plane of the major face (32).

8. A device according to Claim 7, characterised in that the first connector (54) includes two male pins (64) surrounded by an insulating sleeve (66) which is fixed with respect to the strip (48).

9. A device according to one of Claims 1 to 8, characterised in that the second connector (58) is adapted to be connected to the connector (60) of the electrical circuit (C) in a direction at right angles to the plane of the major face (32) of the heat exchanger body.

10. A device according to Claim 9, characterised in that the second connector (58) comprises two male pins (68) surrounded by an insulating sleeve (70) which is fixed with respect to the strip (48).

11. A device according to one of Claims 1 to 10, characterised in that the strip (48) includes, close to the second connector (58), a sleeve portion (74) adapted for the passage through it of a fastening means (76) for securing the strip (48) to the heat exchanger body.

12. A device according to one of Claims 1 to 11, characterised in that it includes an electrical resistor (80), which is connected between one of the electrical conductors (52) and an intermediate pin (68) of the second connector (58), and which is situated in a position close to the working zone of the rotor (30).
